(19) Europäisches Patentamt

European Patent Office

Office européen des brevets

(11) Veröffentlichungsnummer: **0 484 897 A2**

(12) **EUROPÄISCHE PATENTANMELDUNG**

(21) Anmeldenummer: **91118897.7**

(22) Anmeldetag: **06.11.91**

(51) Int. Cl.⁵: **G01S 3/16**

(30) Priorität: **08.11.90 DE 4035441**

(43) Veröffentlichungstag der Anmeldung:
**13.05.92 Patentblatt 92/20**

(84) Benannte Vertragsstaaten:
**DE FR GB NL**

(71) Anmelder: **ROBERT BOSCH GMBH**
**Postfach 30 02 20**
**W-7000 Stuttgart 30(DE)**

(72) Erfinder: **Bode, Fr.-Wilhelm, Dipl.-Ing.**
**Hauptstrasse 10**
**W-3054 Apelern(DE)**
Erfinder: **Fischer, Hans-Jürgen, Dr.-Ing.**
**Sensburger Ring 56A**
**W-3200 Hildesheim(DE)**

(54) **Verfahren und Vorrichtung zur Bestimmung der Richtung einfallender Funksignale.**

(57) Es wird ein Verfahren und eine Vorrichtung zur Bestimmung der Richtung einfallender Funksignale mittels wenigstens zweier, vorzugsweise vierer Antennen beschrieben, deren Antennenspannungen durch einen Empfänger ausgewertet werden. Ziel ist insbesondere die Bestimmung der relativen Richtung von Fahrzeugen im Straßenverkehr.

Die von den als Richtantennen ausgebildeten und in unterschiedliche Richtungen ausgerichteten Antennen gelieferten Antennenspannungen werden zeitversetzt periodisch gedämpft und gemeinsam dem Empfänger zugeführt. In diesem wird dann durch Verknüpfung und/oder Vergleich der Antennenspannungen untereinander und/oder mit einer Referenzspannung ein Richtungswert ermittelt.

Fig. 1

EP 0 484 897 A2

Die Erfindung betrifft ein Verfahren zur Bestimmung der Richtung einfallender Funksignale mittels wenigstens zweier Antennen, deren Antennenspannungen durch einen Empfänger ausgewertet werden, nach dem Oberbegriff des Anspruchs 1.

Im Zusammenhang mit der zunehmenden Verkehrsdichte im Straßenverkehr steigt auch die Unfallgefahr der Verkehrsteilnehmer. Durch Verfahren, die die Position, die Art und weitere Merkmale benachbarter Fahrzeuge zu erfassen, lassen sich Fahrzeugführern wichtige Informationen zugänglich machen, nach denen sie ihre Fahrweise anpassen und dadurch gefährliche Situationen vermeiden können. Diese Informationen umfassen auch die Richtung, in der sich andere Fahrzeuge relativ zum eigenen Fahrzeug befinden.

Bei Fahrzeugen, die mit Funksendern zum Datenaustausch ausgestattet sind, besteht die Möglichkeit, die Richtung dieser Fahrzeuge über die Richtung zu bestimmen, aus der die Funksignale einfallen.

Aus E. Baur, "Einführung in die Radartechnik", Teubner Studienskripten, ist ein Winkelmeßverfahren für einfallende Funksignale bekannt, bei dem die Richtung aus einem Phasenvergleich einer auf eine Meßebene mit zwei Antennen einfallenden Wellenfront bestimmt wird. Dieses als Phasenmonopulsverfahren bezeichnete Verfahren stellt hohe Anforderungen an den mechanischen Aufbau der Antennen und arbeitet bei großen Winkelbereichen nur eindeutig, wenn die Antennen eng benachbart sind.

Der Erfindung liegt die Aufgabe zugrunde, ein Verfahren zur Bestimmung der Richtung einfallender Funksignale so auszugestalten, daß bei geringen mechanischen Anforderungen an die Antennen und einfachen schaltungstechnischen Maßnahmen genaue und über einen großen Winkelbereich eindeutige Richtungswerte erfaßbar sind.

Diese Aufgabe wird bei einem Verfahren nach dem Oberbegriff des Anspruchs 1 durch die im kennzeichnenden Teil angegebenen Merkmale gelöst.

Die Erfindung beruht auf der Überlegung, daß die Antennenspannungen von unterschiedlich ausgerichteten Richtantennen davon abhängig sind, aus welcher Richtung ein Funksignal einfällt. Durch gemeinsame Auswertung der Antennenspannungen lassen sich nicht nur grobe Winkelsegmente, sondern auch Zwischenwerte für die Einfallsrichtung des Funksignals erhalten. Durch zeitversetzte periodische Dämpfung der Antennenspannungen gelingt die Auswertung der Antennenspannungen mit nur einen Empfänger.

Da das Meßprinzip nicht auf einer Phasenmessung der ankommenden Wellenfront, sondern auf einer Feldstärkenmessung beruht, sind die mechanischen Anforderungen an den Aufbau der Antennen gering und die Eindeutigkeit der Ergebnisse ist weitgehend unabhängig vom Abstand der Antennen. Weiterhin sind die Meßergebnisse von der Sendefrequenz der Funksignale unabhängig. Es lassen sich auch modulierte Funksignale auswerten, so daß eine Datenübertragung zeitgleich mit einer Richtungsbestimmung erfolgen kann.

Ein für den Datenempfang vorgesehener Empfänger kann daher für die Richtungsbestimmung mit ausgenutzt werden. Bei Frequenz- oder Phasenmodulation treten keinerlei Probleme auf. Lediglich bei Amplitudenmodulation wäre sicherzustellen, daß die Frequenz der periodischen Dämpfung außerhalb des Bereichs der Modulationsfrequenz liegt.

Wird die periodische Dämpfung durch zyklisches Abschalten der Antennen durchgeführt, so läßt sich dennoch ein kontinuierlicher Datenempfang sicherstellen, wenn stets eine Antenne angeschaltet bleibt und die Antennen keine zu extreme Richtwirkung aufweisen.

Die Erfindung betrifft ferner eine Vorrichtung zur Bestimmung der Richtung einfallender Funksignale, welche wenigstens zwei Antennen und einen Empfänger umfaßt, nach dem Oberbegriff des Anspruchs 9.

Diesbezüglich liegt ihr die Aufgabe zugrunde, eine Vorrichtung zur Bestimmung der Richtung einfallender Funksignale zu schaffen, die geringe mechanischen Anforderungen an die Antennen stellt und mit einfachen schaltungstechniscen Maßnahmen genaue und über einen großen Winkelbereich eindeutige Richtungswerte erfaßt.

Diese Aufgabe wird bei einer Vorrichtung nach dem Oberbegriff des Anspruchs 1Ø durch die im kennzeichnenden Teil angegebenen Merkmale gelöst.

Weiterbildungen und vorteilhafte Ausgestaltungen des Verfahrens und der Vorrichtung ergeben sich aus den Ansprüchen, der weiteren Beschreibung und der Zeichnung, die ein Ausführungsbeispiel veranschaulicht.

In der Zeichnung zeigen:
Fig. 1    ein Blockschaltbild einer zur Richtungsbestimmung geeigneten Vorrichtung,
Fig. 2    ein erstes Diagramm eines periodischen Dämpfungsverlaufs,
Fig. 3    ein zweites Diagramm eines periodischen Dämpfungsverlaufs.

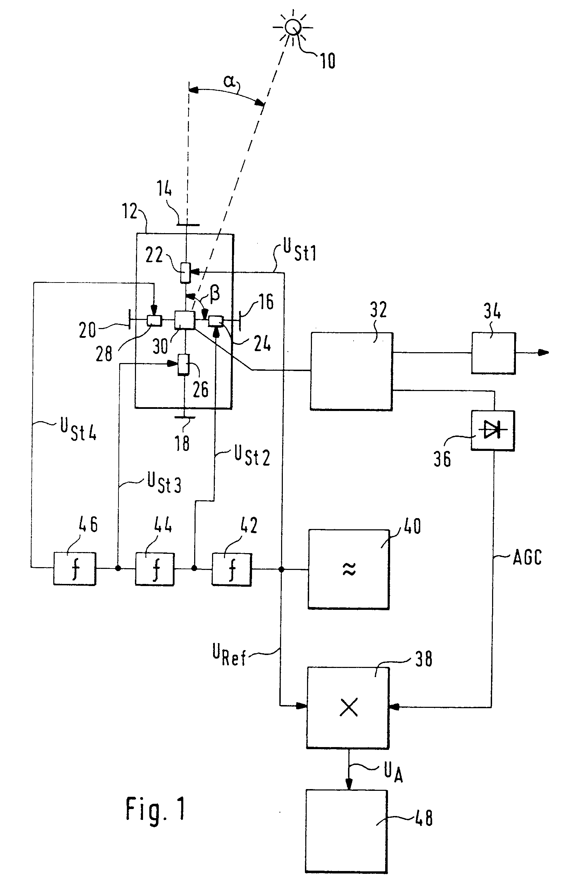

Fig. 1 zeigt ein Blockschaltbild einer zur Richtungsbestimmung geeigneten Vorrichtung. Diese dient dazu, das von einem Fahrzeugsender 1Ø ausgestrahlte und einfallende Funksignal hinsichtlich seiner Einfallsrichtung zu bestimmen. Vier Richtantennen 14, 16, 18, 2Ø sind an einem Fahrzeug 12 angeordnet, und zwar eine erste Antenne 14 an der Vorderseite mit Strahlungsrichtung nach vorn, eine zweite Antenne

2

16 an der rechten Seite mit Strahlungsrichtung nach rechts, eine dritte Antenne 18 an der Rückseite mit Strahlungsrichtung nach hinten und eine vierte Antenne 2Ø an der linken Seite mit Strahlungsrichtung nach links. Alle vier Antennen 14, 16, 18, 2Ø schließen so zu den benachbarten Antennen Winkelsegmente von 9Ø Grad ein.

In den Antennenzuleitungen der Richtantennen 14, 16, 18, 2Ø, die zu einem Verteilungsglied 3Ø führen, sind elektronisch steuerbare Dämpfungsglieder 22, 24, 26, 28 angeordnet. Das Verteilungsglied 3Ø seinerseits ist mit einem Empfänger 32 verbunden, bei dem es sich um einen für einen Datenaustausch vorgesehenen Empfänger handeln kann, der bereits über einen Demodulator 34, z. B. einen FSK-Demodulator für Datentelegramme verfügt. Dieser Empfänger 32 ist außerdem mit einem AM-Demodulator 36 ausgestattet, der eine Regelspannung AGC zur Regelung der Verstärkerstufen des Empfängers 32 besitzt.

Da die Regelspannung AGC ein Maß für die Antennenspannung am Eingang des Empfängers 32 darstellt, kann sie zur Richtungsbestimmung ausgenutzt werden, indem sie einer Verknüpfungsschaltung 38 oder einem Vergleicher 38 zugeführt wird. Weiterhin erhält die Verknüpfungsschaltung 38 bzw. der Vergleicher 38 eine von einem Oszillator 4Ø stammende Steuerspannung als Referenzspannung $U_{Ref}$. Die Steuerspannung $U_{st1}$ wird außerdem direkt oder über Zeitverzögerungsglieder 42, 44, 46 als $U_{st2}$, $U_{st3}$ und $U_{st4}$ den elektronisch steuerbaren Dämpfungsgliedern 22, 24, 26, 28 zugeführt.

Die Verzögerungszeiten $f$ der Zeitverzögerungsglieder 42, 44, 46 sind so bemessen, daß sie entsprechend den Winkelsegmenten von 9Ø Grad zwischen den Antennen 14, 16, 18, 2Ø eine Phasenverschiebung der periodischen Oszillatorsteuerspannung von ebenfalls jeweils 9Ø Grad bewirken. Dadurch wird das erste Dämpfungsglied 22 direkt vom Oszillator 4Ø angesteuert, das zweite 24 mit einer um 9Ø Grad verschobenen Steuerspannung $U_{st2}$, das dritte 26 mit einer um 18Ø verschoben Steuerspannung $U_{st3}$ und schließlich das vierte 28 mit einer um 27Ø Grad verschobenen Steuerspannung $U_{st4}$.

Die Frequenz des Oszillators 4Ø ist so bemessen, daß sie im Falle amplitudenmodulierter Funksignale außerhalb der Bandbreite des Modulationssignals liegt. Werden Funksignale nur innerhalb bestimmter Zeitfenster ausgestrahlt, so muß der Oszillator 4Ø mit diesen Zeitfenstern synchronisiert werden. Es ist dann möglich, einen oder mehrere volle Perioden der Oszillatorsteuerspannung innerhalb eines Zeitfensters ablaufen zu lassen oder auch eine volle Periode auf vier aufeinanderfolgende Zeitfenster aufzuspalten. Eine Periode der Oszillatorsteuerspannung entspricht der Zeitspanne, bei der alle elektronischen Dämpfungsglieder einmal angesteuert werden.

Der Verknüpfungsschaltung 38 bzw. dem Vergleicher 38 ist ein Rechner 48 nachgeschaltet, der die Richtungswerte $\alpha$, die während mehrerer Dämpfungsperioden erfaßt wurden, mittelt und so eine erhöhte Genauigkeit ermöglicht.

Für die vom Oszillator 4Ø erzeugte Steuerspannung sind unterschiedliche Zeitfunktionen möglich, von denen zwei erläutert werden.

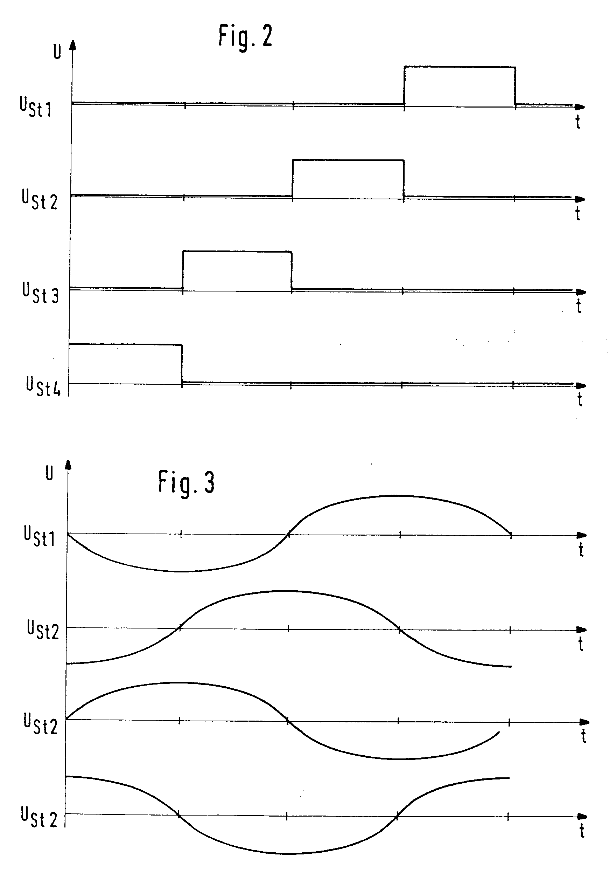

Die in Fig. 2 dargestellte Steuerspannung entspricht einem Schaltsignal, welches die elektronisch steuerbaren Dämpfungsglieder 22, 24, 26, 28 periodisch abschaltet. Diese Lösung läßt sich schaltungstechnisch besonders einfach realisieren, da der Oszillator 4Ø als einfacher digitaler Taktgenerator, die Zeitverzögerungsglieder 42, 44, 46 als Teiler oder Schieberegister und die elektronisch steuerbaren Dämpfungsglieder 22, 24, 26, 28 als Schalter ausgebildet sein können. Die Steuerspannung sorgt dafür, daß stets drei Antennen abgeschaltet sind während nacheinander die erste 14, zweite 16, dritte 18 und vierte Antenne 2Ø angeschaltet werden.

Fällt das Funksignal genau in Strahlungsrichtung einer der vier Antennen 14, 16, 18, 2Ø ein, so gibt lediglich diese Antenne eine wesentliche Antennenspannung ab und es ergeben sich mögliche Richtungswerte $\alpha$ von Ø Grad, 9Ø Grad, 18Ø Grad oder 27Ø Grad. Bei Zwischenwerten geben zwei benachbarte Antennen, in Fig. 1 als die erste 14 und die zweite Antenne 16 wesentliche Antennenspannungen ab. Dadurch ist zunächst das Winkelsegment $\beta$ eindeutig bestimmt, in das das Funksignal einfällt. Durch Mittelwertbildung oder Interpolation der beiden Antennenspannungen, die nacheinander gemessen werden, läßt sich darüberhinaus mittels des Verknüpfungsgliedes 38 auch der exakte Zwischenwert als Richtungswert $\alpha$ ermitteln.

Bei einer anderen Alternative, wie sie in Fig. 3 dargestellt ist, erzeugt der Oszillator 4Ø eine Steuerspannung entsprechend einer stetigen Zeitfunktion, hier einer Sinusfunktion. Die Amplitude der Steuerspannung wird so gewählt, daß durch die Dämpfung die Antennenspannung nur um maximal 1Ø % vermindert wird. Durch diesen geringen Modulationsgrad wird eine Beeinträchtigung des Datenempfangs sicher verhindert.

Die Steuerspannung liegt mit der entsprechenden Phasenverschiebung $f$ an allen elektronischen Dämpfungsgliedern 22, 24, 26, 28 an. Alle Antennen 14, 16, 18, 2Ø erzeugen einen Beitrag zur Summenspannung. Durch die periodische Dämpfung der Dämpfungsglieder 22, 24, 26, 28 schwankt der Summenverlauf aller Antennenspannungen und damit auch der Verlauf der Regelspannung AGC im Takte der Steuerspannung. Sofern das Funksignal in Strahlungsrichtung der ersten Antenne 14 einfällt, ist die periodische Regelspannung AGC phasengleich mit der Steuerspannung $U_{st1}$ des Oszillators 4Ø, die sich gleichzeitig als Referenzspannung $U_{Ref}$ eignet. Je mehr der Einfallswinkel von dieser Richtung jedoch im Sinne einer Rechtsdrehung abweicht, desto größer wird die Phasenverschiebung zwischen der periodischen Regelspannung AGC und der Steuerspannung $Us_{t1}$ des Oszillators 4Ø. Durch Ausbildung der Verknüpfungs- schaltung 38 bzw. des Vergleichers 38 als Phasenvergleicher läßt sich eine Ausgangsspannung $U_A$ erzeugen, die unmittelbar ein Maß für den Richtungswert $\alpha$ darstellt. Angenommen, der Wertebereich der Ausgangsspannung $U_A$ desPhasenvergleichers 38 liege zwischen den Grenzspannungen $U_1$ und $U_2$, dann erhält man für die vier Hauptrichtungen Werte gemäß folgender Tabelle:

$$U_A = U_1 \qquad\qquad => \quad \alpha = \quad Ø \text{ Grad}$$

$$U_A = Ø,25 * (U_2 - U_1) \qquad => \quad \alpha = \quad 9Ø \text{ Grad}$$

$$U_A = Ø,5Ø * (U_2 - U_1) \qquad => \quad \alpha = 18Ø \text{ Grad}$$

$$U_A = Ø,75 * (U_2 - U_1) \qquad => \quad \alpha = 279 \text{ Grad}$$

$$U_A = U_2 \qquad\qquad => \quad \alpha = 36Ø \text{ Grad}$$

Für Richtungswerte $\alpha$, die zwischen den Hauptrichtungen liegen, ergeben sich entsprechend Zwischenwerte.

**Patentansprüche**

1. Verfahren zur Bestimmung der Richtung einfallender Funksignale mittels wenigstens zweier Antennen, deren Antennenspannungen durch einen Empfänger ausgewertet werden, insbesondere zur Bestimmung der relativen Richtung von Fahrzeugen im Straßenverkehr, dadurch gekennzeichnet, daß die von den als Richtantennen ausgebildeten und in unterschiedliche Richtungen ausgerichteten Antennen gelieferten Antennenspannungen zeitversetzt periodisch gedämpft werden und gemeinsam dem Empfänger zugeführt werden, in welchem durch Verknüpfung und/oder Vergleich der Antennenspannungen untereinander und/oder mit einer Referenzspannung ein Richtungswert ermittelt wird.

2. Verfahren nach Anspruch 1, dadurch gekennzeichnet, daß die periodische Dämpfung der Antennenspannungen durch periodisches Abschalten der Antennen vorgenommen wird.

3. Verfahren nach Anspruch 2, dadurch gekennzeichnet, daß der Richtungswert durch gewichtete Mittelwertbildung der Antennenpegel benachbarter Antennen ermittelt wird.

4. Verfahren nach Anspruch 1, dadurch gekennzeichnet, daß die periodische Dämpfung der Antennenspannungen durch Verändern der Dämpfung von Dämpfungsgliedern in Abhängigkeit einer stetigen Zeitfunktion, z.B. einer Sinus- oder Cosinus-Funktion vorgenommen wird.

5. Verfahren nach Anspruch 4, dadurch gekennzeichnet, daß der Richtungswert durch Phasenvergleich des Summenverlaufs aller Antennenspannungen mit einer Referenzspannung gewonnen wird, wobei die Referenzspannung vorzugsweise der die Dämpfung der Dämpfungsglieder verändernden stetigen Zeitfunktion in einer konstanten Phase folgt.

6. Verfahren nach einem oder mehreren der Ansprüche 1 bis 5, dadurch gekennzeichnet, daß die Antennen so ausgerichtet sind, daß sie gleiche oder ungleiche Winkelsegmente einschließen, und daß der Zeitversatz der periodischen Dämpfung der einzelnen Antennenspannungen im Verhältnis zu einer Periode so gewählt ist, daß er dem Verhältnis der Winkelsegmente zu deren Vollkreis entspricht.

7. Verfahren nach Anspruch 6, dadurch gekennzeichnet, daß vier im Winkel von 9Ø Grad zur benachbar- ten Antenne ausgerichtete Antennen verwendet werden und der Zeitversatz des Dämpfungsverlaufs für die Antennenspannungen jeweils 9Ø Grad zwischen benachbarten Antennen gewählt ist.

4

**8.** Verfahren nach einem oder mehreren der Ansprüche 1 bis 7, <u>dadurch gekennzeichnet</u>, daß die erhaltenen Richtungswerte über mehrere Dämpfungs-Perioden gemittelt werden.

**9.** Vorrichtung zur Bestimmung der Richtung einfallender Funksignale, welche wenigstens zwei Antennen (14, 16, 18, 2Ø) und einen Empfänger (32) umfaßt, insbesondere zur Bestimmung der relativen Richtung von Fahrzeugen im Straßenverkehr, <u>dadurch gekennzeichnet</u>, daß die Antennen (14, 16, 18, 2Ø) als Richtantennen ausgebildet und in unterschiedliche Richtungen ausgerichtet sind, daß Dämpfungsglieder (22, 24, 26, 28) für die von den Antennen (14, 16, 18, 2Ø) gelieferten Antennenspannungen vorgesehen sind, die zeitversetzt periodisch ansteuerbar sind und daß die Antennenspannungen gemeinsam dem Empfänger (32) zugeführt sind, welcher eine Verknüpfungsschaltung (38) und/oder einen Vergleicher (38) für die Antennenspannungen untereinander und/oder mit einer Referenzspannung ($U_{Ref}$) zur Ermittlung eines Richtungswertes ($\alpha$) umfaßt.

**10.** Vorrichtung nach Anspruch 9, <u>dadurch gekennzeichnet</u>, daß die Dämpfungsglieder (22, 24, 26, 28) als Schalter ausgebildet sind.

**11.** Vorrichtung nach Anspruch 9, <u>dadurch gekennzeichnet</u>, daß die Dämpfungsglieder (22, 24, 26, 28) durch einen Oszillator (4Ø) gesteuert sind, der Steuerspannungen ($U_{st1}$, $U_{st2}$, $U_{st3}$, $U_{st4}$) in Abhängigkeit einer stetigen Zeitfunktion, z.B. einer Sinus- oder Cosinus-Funktion erzeugt.

**12.** Vorrichtung nach Anspruch 11, <u>dadurch gekennzeichnet</u>, daß der Oszillator (4Ø) eine einzige Steuerspannung ($U_{st1}$) erzeugt, daß den Dämpfungsgliedern (22, 24, 26, 28) direkt bzw. über Zeitverzögerungsglieder (42,44,46) zugeführt wird.

**13.** Vorrichtung nach Anspruch 11 und/oder 12, <u>dadurch gekennzeichnet</u>, daß als Vergleicher (38) ein Phasenvergleicher dient, dem einerseits der Summenverlauf aller Antennenspannungen oder eine damit verknüpfte Spannung (AGC) und andererseits eine Referenzspannung ($U_{Ref}$) zugeführt ist, wobei die Referenzspannung ($U_{Ref}$) vorzugsweise der die Dämpfung der Dämpfungsglieder (22, 24, 26, 28) verändernden stetigen Zeitfunktion in einer konstanten Phase folgt.

**14.** Vorrichtung nach einem oder mehreren der Ansprüche 9 bis 13, <u>dadurch gekennzeichnet</u>, daß alle Antennen (14, 16, 18, 2Ø) gleiche oder ungleiche Winkelsegmente ($\beta$) zwischen benachbarten Antennen (14, 16, 18, 2Ø) einschließen und der Zeitversatz ( $f$) der periodischen Dämpfung der einzelnen Antennenspannungen im Verhältnis zu einer Periode dem Verhältnis der Winkelsegmente ($\beta$) zu deren Vollkreis entspricht.

**15.** Vorrichtung nach Anspruch 14, <u>dadurch gekennzeichnet</u>, daß vier im Winkel von 9Ø Grad zur benachbarten Antenne (14, 16, 18, 2Ø) ausgerichtete Antennen (14, 16, 18, 2Ø) vorgesehen sind und der Zeitversatz ( $f$) des Dämpfungsverlaufs für die Antennenspannungen jeweils 9Ø Grad zwischen benachbarten Antennen (14, 16, 18, 2Ø) beträgt.

**16.** Vorrichtung nach einem oder mehreren der Ansprüche 9 bis 15, <u>dadurch gekennzeichnet</u>, daß ein Rechner (48) zur Mittelung oder Korrektur der Richtungswerte ($\alpha$) über mehrere Dämpfungs-Perioden vorgesehen ist, dem die erhaltenen Richtungswerte ($\alpha$) zugeführt sind.

Fig. 1

Fig. 2

Fig. 3